# EUROPÄISCHE PATENTSCHRIFT

(11) **EP 2 120 394 B1**
(45) Veröffentlichungstag und Bekanntmachung des Hinweises auf die Patenterteilung: **05.03.2014**
(21) Anmeldenummer: 09167629.6
(22) Anmeldetag: 14.06.2005
(51) Int. Cl.: H04L 12/64, H04N 7/14, H04N 7/16, H04L 12/28

(54) **Verfahren zum Übertragen von Daten in einem hybriden Netzwerk**
Method for data transmission in a hybrid network
Procédé pour la transmission de données dans un réseau hybride

(30) Priorität: 17.06.2004 DE 102004029302
(43) Veröffentlichungstag der Anmeldung: 18.11.2009
(62) Teilanmeldung aus: 05012774.5
(73) Patentinhaber: Vodafone Holding GmbH, 40213 Düsseldorf (DE)
(72) Erfinder: Rauch, Christian, 82418, Seehausen (DE); Scherand, Holger, 85464, Neufinsing (DE)
(74) Vertreter: Müller & Schubert

(56) Entgegenhaltungen:
- EP-A- 0 731 572
- EP-A- 0 975 109
- WO-A-97/12489
- WO-A-03/045064
- US-A- 5 295 140
- US-A1- 2002 021 809
- RAUCH C ET AL: "Hybrid Mobile Interactive Services combining DVB-T and GPRS" PROCEEDINGS OF EUROPEAN PERSONAL AND MOBILE COMMUNICATIONS CONFERENCE, 19. Februar 2001 (2001-02-19), Seiten 1-8, XP002278953

## Beschreibung

Die vorliegende Erfindung betrifft ein Verfahren zum Übertragen von Daten in einem Übertragungsnetzwerk gemäß dem Oberbegriff von Patentanspruch 1. Weiterhin betrifft die Erfindung ein hybrides Netzwerk gemäß dem Oberbegriff von Patentanspruch 13.

Hybride Netzwerke sind an sich bereits bekannt und bestehen in der Regel aus einem Broadcastnetzwerk mit wenigstens einem digitalen breitbandigen Vorwärtskanal, auch "Broadcastkanal" genannt. Über den Broadcastkanal werden Dateninhalte von der Anbieterseite auf die Nutzerseite übertragen. Weiterhin verfügen hybride Netzwerke auch über ein Kommunikationsnetzwerk mit wenigstens einem Interaktionskanal. Bei dem Interaktionskanal handelt es sich üblicherweise um einen Datenkanal, beispielsweise einen bidirektionalen Datenkanal, über den beispielsweise Interaktionen zwischen der Nutzerseite und der Anbieterseite stattfinden können.

Ein hybrides Netzwerk entsteht durch die Kombination wenigstens eines Vorwärtskanals mit wenigstens einem Datenkanal. Auf der Nutzerseite (Kundenseite) des hybriden Netzwerks ist dann jeweils eine geeignete Endeinrichtung erforderlich.

Ein solches hybrides Netzwerk weist in der Regel wenigstens eine zentrale Rechnereinheit, beispielsweise eine Servereinrichtung, wenigstens eine Datenquelle, wenigstens eine Endeinrichtung, wenigstens einen unabhängigen Vorwärtskanal und wenigstens einen unabhängigen Datenkanal auf, wobei die zentrale(n) Rechnereinheit(en) und die Endeinrichtung(en) jeweils Schnittstellen zu dem Vorwärtskanal und dem Datenkanal aufweisen.

Hybride Netzwerke der genannten Art können für unterschiedlichste Anwendungen eingesetzt werden. Beispielsweise ist es bekannt, derartige Netzwerke im Zusammenhang mit der Übertragung von Informationsdaten, insbesondere von Informationsdaten in Form von Printmedieninhalten einzusetzen. Eine solche Lösung ist beispielsweise in der Veröffentlichung "Hybrid Mobile Interactive Services combining DVB-T and GPRS", erschienen in "Proceedings EMPCC 2001 (fourth european personal mobile communications conference)", Wien 19. - 22. Februar 2001 von C. Rauch et al. beschrieben. Diese Veröffentlichung beschreibt ein Verfahren sowie ein System zum elektronischen Übertragen von Informationsdaten in Form von Printmedieninhalten über ein hybrides Netzwerk, das wenigstens einen Vorwärtskanal (DVB-T) (Digital Video Broadcasting - Terrestrisch), wenigstens einen Interaktionskanal (GPRS) (General Packet Radio Service), wenigstens eine zentrale Rechnereinheit, die zumindest zeitweilig mit einer Datenquelle zusammenwirkt, und wenigstens eine einem Nutzer des Systems zugeordnete Endeinrichtung aufweist. Die digitalen Printmedieninhalte werden über den wenigstens einen Vorwärtskanal von der zentralen Rechnereinheit an die wenigstens eine Endeinrichtung übertragen. Weiterhin ist vorgesehen, daß die wenigstens eine Endeinrichtung über den wenigstens einen Interaktionskanal zumindest zeitweilig mit der zentralen Rechnereinheit interagieren kann.

In der US 2002/021809 A1 ist ein Hybridnetzwerk beschrieben. Gewünschte Inhalte werden über einen Broadcastkanal übertragen. Über einen Telekommunikationskanal werden Servicedaten übertragen, die zumindest Zeitdaten zu den Übertragungsdaten umfassen. Der Empfänger für die gewünschten Broadcastdaten kann temporär heruntergefahren werden, um Energie zu sparen. Wenn die Servicedaten über den Telekommunikationskanal übertragen werden und somit dem Empfänger mitteilen, wann die gewünschten Übertragungsdaten über den Broadcastkanal übertragen werden, schaltet sich der Empfänger zu der gewünschten Zeit ein.

Die WO 97/12489 A beschreibt eine Lösung, mittels derer Zeiten geteilt werden können, um dadurch Frequenzen in zellularen Kommunikationssystemen wiederverwenden zu können.

Aus der WO 03/045064 A1 ist weiterhin eine Lösung bekannt, mittels derer Broadcastdaten auf eine Nutzer-Endeinrichtung übertragen werden. Die Auswahl und Einstellung der zu übertragenden, gewünschten Broadcastdaten erfolgt nutzerseitig über den Interaktionskanal. Die Parameter, die den Empfang sowie die Verwertung der übertragenen Broadcastdaten ermöglichen, werden von der Anbieterseite über den Interaktionskanal auf die Nutzerseite übertragen. Die Übertragung der eigentlichen Broadcastdaten erfolgt in üblicher Weise über den Broadcastkanal.

Für die bekannten Lösungen gilt, das in solchen Fällen, in denen die Übertragung der Broadcastdaten über den Broadcastkanal nicht vollständig oder aber fehlerbehaftet erfolgt, eine Vervollständigung der übertragenen Daten beziehungsweise eine Beseitigung von Übertragungsfehlern über den Interaktionskanal erfolgen kann. Die Abrechnung der angebotenen Dienste erfolgt in der Regel über den Interaktionskanal beziehungsweise das diesem zugrunde liegende Kommunikationsnetzwerk.

Bei der Übertragung von Broadcastdaten über ein Broadcastnetzwerk handelt es sich um einen gleichzeitigen Massenversand von Daten an eine große Anzahl von Nutzern. Die Übertragung erfolgt in der Regel nach dem Prinzip des "Streamings" oder "Downloads". Insbesondere der "Download" kann nach dem Prinzip eines "Datenkarussells" funktionieren. Das bedeutet, dass die über den Broadcastkanal übertragenen Inhalte im Falle des "Streamings" nach einem festen, vorgeplanten Zeitplan sequentiell übertragen werden oder im Falle des Download-Karussells in regelmäßigen Zeitabständen wiederholt werden. Aus diesem Grund ist es schwierig, die über einen Broadcastkanal übertragenen Broadcastdaten für bestimmte Nutzer zu "personalisieren". Je nach Menge und Zeitintervall der übertragenen Broadcastdaten kann dies für einen Nutzer relativ lange Wartezeiten bedeuten, bis die von ihm gewünschten Inhalte erneut übertragen werden. Ebenso ist es schwierig, bei der Übertragung von Broadcastdaten auf bestimmte Nutzerwünsche einzugehen.

Bislang sind die Übertragungsverfahren "Streaming" und "Download" (individuell oder über ein Datenkarussell) jeweils über ein Rundfunk- oder Telekommunikationsnetz einzeln implementierbar. Eine maximal effiziente Kombination aller Techniken unter Berücksichtigung von Übertragungskosten/-ressourcen und Endnutzerbedürfnissen/- zahlungsbereitschaft sind bisher nicht realisiert.

Die bekannten Lösungen können nur für einzelne Bedürfnisse und Zielgruppen optimiert werden, sind für andere Endnutzergruppen aber ineffizient. So eignet sich rein rundfunkbasiertes "Streaming" beispielsweise nur für viele Nutzer zur gleichen Zeit, rundfunkbasierter "Download" für eine mäßige Nutzerzahl, die innerhalb einer geringen Zeitspanne zu erreichen ist, und die Datenübertragung über einen Interaktionskanal - etwa in Form eines Telekommunikations- beziehungsweise Mobilfunkkanals - für wenige Nutzer und für beliebige, individuelle Zeitpunkte der Informationsbereitstellung.

Daraus resultieren jedoch Nachteile bezüglich der Kosten- und Ressourceneffizienz der elektronischen Übertragung sowie ein unzureichender Komfort für den Endnutzer bei der Bereitstellung der Nutzerdaten.

Damit ein Nutzer weiß, wann die für ihn interessanten Dateninhalte in Form von Übertragungsdaten von der Anbieterseite übertragen werden, existieren sogenannte "Electronic Program Guides (EPG)". Bei einem EPG handelt es sich um eine elektronische Programmvorschau-Datei, in der zumindest die Zeiten, wann welche Daten übertragen werden, angegeben sind. Darüber hinaus können die Servicedaten auch noch Informationen zu den jeweiligen Übertragungsdaten aufweisen, beispielsweise in Form von Inhaltsangaben, Werbe-Trailern und dergleichen. Man könnte ein EPG somit auch mit einer Art elektronischer TV-Zeitschrift vergleichen.

"Electronic Program Guides" sind im Stand der Technik bereits bekannt. Beispielsweise ist in der WO 94/29811 A1 ein solcher EPG im Zusammenhang mit der Übertragung von TV-Inhalten beschrieben. Dieser EPG wird von der Anbieterseite auf wenigstens eine Endeinrichtung auf der Nutzerseite übertragen. Der EPG zeigt dem Nutzer Datum und Uhrzeit der kommenden TV-Programme an, die dieser auf den ihm zur Verfügung stehenden Kanälen empfangen kann. Nachdem der Nutzer einen gewünschten Kanal ausgewählt hat muss er warten, bis das gewünschte Programm übertragen wird. Der Nutzer hat die Möglichkeit, den EPG auf seiner Endeinrichtung abzuspeichern. Er hat somit die Möglichkeit, sich unabhängig durch den Inhalt des EPG zu bewegen, um die für ihn interessanten Inhalte zeitunabhängig und in Ruhe auszuwählen. Die EPG-Daten, die auf der Endeinrichtung des Nutzers abgespeichert sind, werden gemäß dieser bekannten Lösung durch den Anbieter aktualisiert. Dazu muss jedoch nicht stets der gesamte EPG übertragen werden, was Übertragungs-Bandbreite einspart. Die Aktualisierung erfolgt beispielsweise automatisch und in bestimmten Zeitabständen oder aber zu bestimmten Ereignissen, etwa wenn eine kurzfristige Programmänderung ansteht oder dergleichen. Damit die Übertragungsressourcen innerhalb des Übertragungsnetzwerks geschont werden können, werden die EPG-Daten nach dieser bekannten Lösung in Austastlücken der übertragenen Videosignale übertragen.

Alle aus dem Stand der Technik bekannten Lösungen weisen jedoch Nachteile auf. Viele bekannte Lösungen setzten nicht auf die Voraussetzung, dass ein interaktiver mobiler Telekommunikationskanal zur Verfügung steht, sondern versuchen Interaktion via einem breitbandigen Broadcastkanal abzuwickeln (Bildschirmtext-Prinzip: "schnelles" permanentes Wiederholen der Daten, die übertragene Datenmenge ist relativ klein). Breitbandige Rundfunkkanäle setzen im klassischen TV-Umfeld heute auf interaktive Lösungen vor allem über sogenannte "Set Top Boxen".

Die Übertragung des Bildschirmtext-Prinzips insbesondere auf den mobilen Telekommunikationsmarkt ist nicht möglich, wenn es sich um große Datenmengen und neue Datenformate handelt. Es ist aus Energiespargründen bezüglich der insbesondere mobilen Endeinrichtungen nicht möglich, auf einen breitbandigen DVB-T/H (Digital Video Broadcasting - Terrestrisch/Handheld) Kanal zu lauschen und abzuwarten, bis die gewünschten/angeforderten Übertragungsdaten "vorbeikommen". Dieser Vorgang muss geplant werden. Weiterhin ist eine Reservierung von Bandbreite für eine einzelne interaktive mobile Klienten-Applikation beziehungsweise deren Inhaltsdaten wirtschaftlich nicht vertretbar. Andere Lösungen benötigen entweder mehr Rundfunknetz-Bandbreite oder mehr Energie auf der Endeinrichtung.

Darüber hinaus existieren beispielsweise Laufzeitunterschiede bei der Signalübertragung in den verschiedenen Übertragungskanaltypen, die bei manchen Klienten-Applikationen berücksichtigt werden müssen.

Bei einer Klienten-Applikation handelt es sich generell um eine bestimmte Anwendung, die auf einer Endeinrichtung ausführbar ist. Derartige Applikationen können auf der Endeinrichtung bereits vorinstalliert sein und dann je nach Bedarf freigeschaltet werden. Ebenso ist es denkbar, dass solche Applikationen über einen Übertragungskanal auf die Endeinrichtung eines Nutzers übertragen werden, sobald dieser eine entsprechende Order abgeschickt hat. Bei einer Applikation kann es sich beispielsweise um einen bestimmten Dienst handeln, den der Nutzer vom Anbieter - beispielsweise in Form eines Abonnements oder in Form von Einzelanwendungen ("pay per view") - bezieht.

Ausgehend vom genannten Stand der Technik liegt der vorliegenden Erfindung die Aufgabe zugrunde, ein verbessertes Verfahren sowie ein verbessertes hybrides

Netzwerk bereitzustellen, mit dem die zuvor beschriebenen Nachteile vermieden werden können. Insbesondere soll eine optimierte, insbesondere zeitoptimierte, Möglichkeit der Datenübertragung in einem Übertragungsnetzwerk geschaffen werden, mittels derer Übertragungsdaten einfach, ressourcenschonend, kosteneffizient und in einer für einen Nutzer attraktiven Weise auf eine diesem zugeordnete Endeinrichtung übertragen werden können.

Diese Aufgabe wird gelöst durch das Verfahren mit den Merkmalen gemäß dem unabhängigen Patentanspruch 1, sowie das hybride Netzwerk mit den Merkmalen gemäß dem unabhängigen Patentanspruch 13. Weitere Vorteile, Merkmale, Aspekte, Details und Effekte der Erfindung ergeben sich aus den Unteransprüchen, der Beschreibung sowie den Zeichnungen. Merkmale und Details, die im Zusammenhang mit dem erfindungsgemäßen Verfahren beschrieben sind, gelten selbst verständlich auch im Zusammenhang mit dem erfindungsgemäßen hybriden Netzwerk, und umgekehrt.

Den unterschiedlichen Aspekten des erfindungsgemäßen Verfahrens liegt das gemeinsame erfinderische Grundkonzept zugrunde, dass die Übertragung von Daten zwischen der Anbieterseite und der Nutzerseite zeitsynchronisiert erfolgt, und das gleichzeitig den Randbedingungen bezüglich eines schonenden Umgangs mit den zur Verfügung stehenden Ressourcen Rechnung getragen wird.

Beschrieben wird gemäß einem ersten Aspekt ein Verfahren zum Übertragen von Daten in einem Übertragungsnetzwerk, wobei das Übertragungsnetzwerk wenigstens einen Übertragungskanal aufweist, über den von wenigstens einer Datenquelle auf der Anbieterseite Übertragungsdaten zumindest zeitweilig zu wenigstens einer Endeinrichtung auf der Nutzerseite übertragen werden, wobei von der Anbieterseite weiterhin zumindest zeitweilig die Übertragungsdaten betreffende Servicedaten auf die wenigstens eine Endeinrichtung übertragen werden, wobei die Servicedaten zumindest Zeitdaten, wann die betreffenden Übertragungsdaten von der Anbieterseite übertragen werden, umfassen und wobei die Servicedaten in der wenigstens einen Endeinrichtung abgespeichert und zu bestimmten Zeiten und/oder Ereignissen automatisch aktualisiert werden. Das Verfahren ist **dadurch gekennzeichnet, dass** sich die wenigstens eine Endeinrichtung automatisch aktiviert, um von der Anbieterseite übertragene Übertragungsdaten zu empfangen, sobald solche Übertragungsdaten übertragen werden, die von dem Nutzer aus den auf seiner Endeinrichtung befindlichen Servicedaten zuvor ausgewählt worden sind.

Durch das Verfahren wird zunächst erreicht, dass die Endeinrichtung nicht mehr dauerhaft aktiv sein muss, um zu "horchen", wann die gewünschten/angeforderten Übertragungsdaten "vorbeikommen" beziehungsweise übertragen werden. Die Endeinrichtung muss sich erst dann aktivieren, wenn die Übertragung der Daten auch tatsächlich stattfindet. Damit können die Endeinrichtungen besonders energiesparend betrieben werden. Das ist insbesondere dann von Vorteil, wenn die Endeinrichtungen als mobile Endeinrichtungen ausgebildet sind.

Beispielsweise kann sich die Endeinrichtung zunächst energiesparend in einem Stand-By-Modus befinden. Wenn nun die Übertragung der Übertragungsdaten ansteht, schaltet sich die Endeinrichtung automatisch aktiv, so dass die gewünschten Daten empfangen werden können. Wie dies im Einzelnen geschieht, wird nachfolgend noch ausführlich beschrieben.

Mit dem Verfahren werden Daten von einer Datenquelle über wenigstens einen Übertragungskanal auf wenigstens eine Endeinrichtung auf der Nutzerseite übertragen. Die Datenquelle muss nicht unbedingt zum Betreiber des Übertragungsnetzwerks gehören. Es ist auch denkbar, dass die Datenquelle einem unabhängigen Anbieter zugeordnet ist, der die Übertragungsdaten erzeugt und bereitstellt. Dabei ist die Erfindung nicht auf bestimmte Übertragungsdatentypen beschränkt. Einige nicht ausschließliche Beispiele hierzu werden im weiteren Verlauf der Beschreibung näher erläutert. Natürlich kann die Datenquelle auch dem Betreiber des Übertragungsnetzwerks zugeordnet sein.

Weiterhin werden von der Anbieterseite zumindest zeitweilig auch Servicedaten übertragen. Bei den Servicedaten handelt es sich grundsätzlich um solche Daten, die die Übertragungsdaten betreffen und charakterisieren. Servicedaten dienen beispielsweise dazu, dem Nutzer Informationen über die zu übertragenden Daten beziehungsweise die Übertragungsdaten zu geben, damit dieser eine für ihn gewünschte Auswahl treffen kann. Nachfolgend werden einige nicht ausschließliche Beispiele erläutert, wie die Servicedaten beschaffen sein können.

Bei den Servicedaten kann es sich beispielsweise um sogenannte EPG-Daten (Electronic Program Guide) oder ESG-Daten (Electronic Service Guide) handeln. Bei ESG-Daten handelt es sich um im Vergleich zu den EPG-Daten erweiterte Servicedaten.

ESG-Daten können Servicedaten über bestimmte angebotene Dienste enthalten. Das können beispielsweise um derartige Servicedaten erweiterte EPG-Daten sein. Bei den ESG-Daten kann es sich aber auch um Servicedaten handeln, die sich nur auf die angebotenen Dienste beziehen.

Die Servicedaten beinhalten zumindest Zeitdaten, wann die betreffenden Übertragungsdaten übertragen werden. Der Endeinrichtung werden somit Informationen darüber übertragen, wann sich die Endeinrichtung aktivieren beziehungsweise einschalten soll, um die Übertragungsdaten zu empfangen.

Die Servicedaten werden, ähnlich wie bei der aus dem Stand der Technik bekannten Lösung, in der wenigstens einen Endeinrichtung abgespeichert und somit für den Nutzer jederzeit verfügbar gemacht. Dieser muss nicht mehr auf die Übertragung der Servicedaten warten, sondern kann sich jederzeit und ganz in Ruhe die ihn interessierenden Inhalte aus den Servicedaten auswählen.

Zu bestimmten Zeiten, beispielsweise in bestimmten Zeitabständen, oder zu bestimmten Ereignissen, etwa wenn kurzfristig eine Programmänderung bezüglich der Übertragung der Übertragungsdaten angesetzt wird, werden die in der Endeinrichtung abgelegten Servicedaten automatisch aktualisiert. Die Aktualisierung wird anbieterseitig vorgenommen. Von der Anbieterseite werden die aktualisierten Daten über wenigstens einen Übertragungskanal auf die Endeinrichtung(en) übertragen, wo die Servicedaten entsprechend aktualisiert werden. Der Vorteil bei dieser Vorgehensweise liegt darin, dass jeweils nur die aktualisierten Servicedaten, nicht jedoch die Gesamtheit aller Servicedaten übertragen werden muss, was Ressourcen bei den Übertragungskanälen einspart. Auf gleiche Weise können veraltete Servicedaten aus der Endeinrichtung gelöscht werden.

Der Nutzer der Endeinrichtung kann aus den ihm zur Verfügung stehenden Servicedaten auswählen, welche Übertragungsdaten er empfangen möchte. Da die Servicedaten auch Zeitdaten, wann die betreffenden Übertragungsdaten übertragen werden, umfassen, "weiß die Endeinrichtung" genau, wann die Übertragungsdaten übertragen werden. Wenn die Übertragungsdaten übertragen werden, schaltet sich die Endeinrichtung automatisch in einen aktiven Zustand, um die Übertragungsdaten zu empfangen.

Die Erfindung ist nicht auf eine bestimmte Anzahl von Übertragungskanälen im Übertragungsnetzwerk beschränkt. Grundsätzlich ist es ausreichend, wenn ein einziger Übertragungskanal vorgesehen ist. Alle Daten können, wie dies auch aus dem Strand der Technik bekannt ist, über ein und denselben Übertragungskanal übertragen werden. Natürlich sind auch Übertragungsnetzwerke mit zwei oder mehr Übertragungskanälen möglich. Darüber hinaus ist die Erfindung auch nicht auf einen bestimmten Typus von Übertragungskanälen beschränkt. Einige nicht ausschließliche Beispiele zur Ausstattung eines Übertragungsnetzwerks mit einer geeigneten Anzahl von Übertragungskanälen und/oder Übertragungskanaltypen werden im weiteren Verlauf der Beschreibung näher erläutert, ohne dass die Erfindung auf diese Beispiele beschränkt wäre.

Die Endeinrichtung benötigt zumindest eine Servicedaten-Datei, beispielsweise einen EPG oder einen ESG, welcher im Wesentlichen einer elektronischen TV-Zeitschrift entspricht (das wäre dann beispielsweise ein EPG). Dieser EPG kann aber vorteilhaft noch durch weitere Informationen angereichert werden, wie beispielsweise zu welchen Zeiten und an welchen Tagen zusätzliche interaktive mobile Klienten-Applikationen auf die Endeinrichtung übertragen werden können oder zu welchen Zeiten und an welchen Tagen weitergehende Daten für die zusätzlichen interaktiven Klienten-Applikationen empfangen werden können (das wäre dann beispielsweise ein ESG).

Das Verfahren sammelt vorteilhaft die Servicedaten von allen verfügbaren Übertragungskanälen ein. Damit ist bekannt, welcher Übertragungskanal zu welcher Zeit welche Übertragungsdaten, beispielsweise welchen Werbe-Trailer, welchen Film oder dergleichen zeigt. Die Servicedaten-Datei beschreibt ebenfalls, zu welchen Zeiten welche Klienten-Applikationen und/oder welche Inhaltsdaten angeboten werden. Periodisch wird nun diese Service-Information via einem Übertragungskanal immer aktualisiert bereitgehalten. Die Frequenz, mit der die Service-Informationen wiederholt werden, kann fest definiert und auf der Endeinrichtung vorgehalten werden. Damit ist es möglich, Downloads durchzuführen ohne das jeweilige Triggern des Nutzers zu benötigen. Wesentlich ist, dass die Endeinrichtung a-priori weiß, wann welche Daten zur Verfügung stehen werden. Damit muss nicht gelauscht werden (Energieersparnis). Es muss auch keine komplette separate Bandbreite nur für Service-Informationen reserviert werden. Stattdessen werden diese Informationen zu gewissen Zeiten für alle Endeinrichtungen über wenigstens einen Übertragungskanal zur Verfügung gestellt. Nach diesem Verfahren können Klienten-Applikationen vor allem relative kurzzeitig nach der Ausstrahlung eines Werbe-Trailers oder während eines TV-Events ausgestrahlt werden. Die Nutzer registrieren sich interaktiv für den Download und bekommen dann kurze Zeit danach (eventuell 10 sec) die Applikation (ohne oder mit rudimentären Daten) übertragen.

Des Weiteren ist die Erfindung nicht auf bestimmte Ausführungsformen in Bezug auf die Endeinrichtung beschränkt. Beispielsweise kann es sich um stationäre Endeinrichtungen, wie beispielsweise stationäre Rechner, TV-Geräte mit geeigneten Zusatzeinrichtungen und dergleichen handeln. Natürlich ist es auch denkbar, dass die Endeinrichtungen mobil ausgestaltet sind, beispielsweise in Form von transportablen Rechnern (Laptops und dergleichen), Mobiltelefonen, PDAs (Personal Digital Assistant), sogenannten "Webpads" und dergleichen. Dabei ist selbstverständlich, dass es sich bei der Nennung der Beispiele nicht um eine abschließende Aufzählung handelt.

Erfindungsgemäß werden auf der Anbieterseite virtuelle Zeitdaten erzeugt und auf die wenigstens eine Endeinrichtung auf der Nutzerseite übertragen, wobei die virtuellen Zeitdaten auf die Übertragungsdaten bezogene Zeitdaten darstellen und wobei die virtuellen Zeitdaten in der wenigstens einen Endeinrichtung empfangen und in dieser automatisch fortgezählt werden.

Die virtuelle Zeit wird in einem entsprechenden Generator auf der Anbieterseite, beispielsweise in einer auf der Anbieterseite befindlichen Rechnereinrichtung, erzeugt. Die virtuelle Zeit wird benötigt, um logisch die Laufzeitunterschiede bei der Übertragung von Daten über den Übertragungskanal auszugleichen.

Das soll anhand eines nicht ausschließlichen konkreten Beispiels verdeutlicht werden, bei dem das Übertragungsnetzwerk zwei unterschiedliche Übertragungskanaltypen aufweist, nämlich einen Broadcastkanal und einen interaktiven Kommunikationskanal. Durch die Erzeugung einer virtuellen Zeit können dann insbesondere Laufzeitunterschiede beim Übertragen im Broadcastkanal sowie im Interaktionskanal ausgeglichen werden. Die Komponente der Broadcastübertragung kann beispielsweise Laufzeitunterschiede von etwa 10 Sekunden einnehmen. Ebenso kann der Interaktionskanal, beispielsweise ein GPRS-Rückkanal, Laufzeitunterschiede bis zu 30 Sekunden einnehmen. Hierbei kann vor allen die Initialisierungszeit inklusive Kostenprüfungen entsprechende Auswirkungen besitzen. Aus diesen Gründen ist es bei manchen Applikationen schwierig oder sogar unmöglich, die reale Zeit zu verwenden. Vielmehr ist es in solchen Fällen zwingend notwendig, eine virtuelle Zeit einzuführen.

Neben dem Generator der virtuellen Zeit auf der Anbieterseite ist in der Endeinrichtung auf der Nutzerseite ein Empfänger für die virtuelle Zeit vorgesehen. Dieser Empfängt die virtuelle Zeit und zählt die virtuelle Zeit selbstständig fort.

Beispielsweise kann vorgesehen sein, dass sich die wenigstens eine Endeinrichtung bereits in einem vorgegebenen Zeitraum, bevor solche Übertragungsdaten übertragen werden, die von dem Nutzer aus den auf seiner Endeinrichtung befindlichen Servicedaten zuvor ausgewählt worden sind, automatisch aktiviert, um die von der Anbieterseite übertragenen Übertragungsdaten zu empfangen. Damit wird auf jeden Fall sichergestellt, dass die Endeinrichtung aktiviert ist, wenn die Übertragungsdaten von der Anbieterseite aus übertragen werden.

Gemäß der vorliegenden Erfindung wird ein Verfahren zum Übertragen von Daten in einem hybriden Übertragungsnetzwerk bereitgestellt, aufweisend wenigstens ein Broadcastnetzwerk mit wenigstens einem als Broadcastkanal ausgebildeten Übertragungskanal zum Übertragen von Übertragungsdaten von der Anbieterseite auf wenigstens eine Endeinrichtung auf der Nutzerseite, sowie ein Kommunikationsnetzwerk mit wenigstens einem als Interaktionskanal ausgebildeten Übertragungskanal zur Interaktion zwischen der Nutzerseite und der Anbieterseite, wobei über den Übertragungskanal von wenigstens einer Datenquelle auf der Anbieterseite Übertragungsdaten zumindest zeitweilig zu wenigstens einer Endeinrichtung auf der Nutzerseite übertragen werden. Das Verfahren ist dadurch gekennzeichnet, dass in einem Generator auf der Anbieterseite virtuelle Zeitdaten zum logischen Ausgleich von Laufzeitunterschieden bei der Übertragung von Daten über den Übertragungskanal erzeugt und auf die wenigstens eine Endeinrichtung auf der Nutzerseite übertragen werden, dass die virtuellen Zeitdaten auf die Übertragungsdaten bezogene Zeitdaten darstellen und dass die virtuellen Zeitdaten in der wenigstens einen Endeinrichtung empfangen und in dieser automatisch fortgezählt werden.

Vorteilhaft kann in den vorgenannten Fällen vorgesehen sein, dass die virtuellen Zeitdaten aus einem Zeitpaar bestehen, wobei ein Teil des Zeitpaars aus Echtzeitdaten besteht und wobei der andere Teil des Zeitpaars aus den eigentlichen virtuellen Zeitdaten besteht.

Die virtuelle Zeit besteht in diesem Fall aus dem Zeitpaar (real_time, virtual_time). Bei der Erzeugung auf der Anbieterseite, beispielsweise in einer entsprechenden Rechnereinrichtung, ist die real_time = virtual_time. Werden die Daten mit dem Zeitpaar versendet und kommen in der Endeinrichtung an, so wird real_time nicht mehr verändert, sondern nur noch die virtual_time genommen. Der Empfänger für die virtuelle Zeit in der Endeinrichtung wird nach dieser Zeit gestellt und beispielsweise im normalen Sekundentakt hoch gezählt. Tritt ein Event in einer interaktiven Klienten-Applikationen auf, so wird dieses mit dem Zeitpaar als Parameter versehen. Werden Event-Daten von der Endeinrichtung zur Anbieterseite, beispielsweise zu einer entsprechenden Rechnereinrichtung, übertragen, so wird das Zeitpaar mit übertragen. Damit kann auf der Anbieterseite, beispielsweise in der Rechnereinrichtung, herausgefunden werden, wie lange die Sendedauer (und beispielsweise eine Überlegdauer beim Nutzer) war und vor allem, ob das Event noch rechzeitig innerhalb der vorgegebenen Überlegdauer war und dergleichen.

Vorteilhaft können von der Anbieterseite weiterhin zumindest zeitweilig Echtzeitdaten auf die wenigstens eine Endeinrichtung übertragen werden, wobei in der wenigstens einen Endeinrichtung Zeit-Synchronisierungsmittel vorgesehen sind, über die in der wenigstens einen Endeinrichtung abgelegte Zeitdaten mit den übertragenen Echtzeitdaten synchronisiert werden. Durch die Übertragung solcher Echtzeitdaten kann sichergestellt werden, dass sowohl auf der Anbieterseite als auch auf den Nutzerseite bezüglich der Übertragungsdaten jeweils die identische Zeit vorherrscht. Damit wird verhindert, dass sich die Endeinrichtung zu einem falschen Zeitpunkt aktiviert, wenn überhaupt keine Datenübertragung über den Übertragungskanal vorgenommen wird. Auch ist es auf diese Weise möglich, eventuelle Zeitunterschiede zwischen der Anbieterseite und der Nutzerseite auszugleichen.

Vorteilhaft ist vorgesehen, dass die auf die wenigstens eine Endeinrichtung übertragenen Übertragungsdaten auf dieser abgelegt und zumindest zeitweilig gespeichert werden. Somit kann der Nutzer auf die Übertragungsdaten auch zu einem späteren Zeitpunkt immer noch zugreifen.

Erfindungsgemäß ist das Übertragungsnetz als hybrides Netzwerk ausgebildet, aufweisend ein Broadcastnetzwerk mit wenigstens einem Broadcastkanal zum Übertragen von Übertragungsdaten von der Anbieterseite auf wenigstens eine Endeinrichtung auf der Nutzerseite, sowie ein Kommunikationsnetzwerk mit wenigstens einem Interaktionskanal zur Interaktion zwischen der Nutzerseite und der Anbieterseite, wobei Daten (beispielsweise Übertragungsdaten, Servicedaten, Echtzeitdaten, virtuelle Zeitdaten und dergleichen) über den wenigstens einen Broadcastkanal und/oder den wenigstens einen Interaktionskanal übertragen werden.

Ein solches hybrides Netzwerk besteht zunächst aus einem Broadcastnetzwerk, das wiederum aus einem oder mehreren Broadcastkanälen besteht. Dabei ist die Erfindung nicht auf bestimmte Ausgestaltungsvarianten des Broadcatnetzwerks oder des wenigstens einen Broadcastkanals beschränkt. Einige nicht ausschließliche Beispiele hierzu werden im weiteren Verlauf der Beschreibung näher erläutert. Über wenigstens einen Broadcatskanal werden die Daten von der Anbieterseite (Netzbetreiberseite) auf wenigstens eine Endeinrichtung eines Nutzers (Dienstenutzer) übertragen. Das erfolgt vorzugsweise nach dem Prinzip des "Streamings".

Ein weiterer Teil des hybriden Netzwerks wird durch ein Kommunikationsnetzwerk gebildet, das wenigstens einen Interaktionskanal aufweist. Über diesen

Interaktionskanal findet eine Interaktion zwischen Anbieter und Nutzer statt, wobei diese Interaktion unidirektional oder aber auch bidirektional ablaufen kann. Auch bezüglich des Kommunikationsnetzwerks ist die Erfindung nicht auf bestimmte Ausführungsformen beschränkt. Einige nicht ausschließliche Beispiele hierzu werden weiter untern beschrieben.

Ein Beispiel für ein hybrides Netzwerk ist etwa eine DVB-T/H-GPRS-Plattform.

Nachfolgend werden einige nicht ausschließliche Beispiele für geeignete Typen von Übertragungskanälen beschrieben.

Beispielsweise können die Übertragungsdaten und/oder Servicedaten und/oder Echtzeitdaten und/oder virtuellen Zeitdaten von der Anbieterseite über wenigstens einen Broadcastkanal, insbesondere einen unidirektionalen Broadcastkanal, auf die wenigstens eine Endeinrichtung übertragen werden. Wie weiter oben bereits ausgeführt wurde, ist die Erfindung nicht auf bestimmte Typen von Broadcastkanälen beschränkt. Beispielsweise kann wenigstens ein Broadcastkanal als unidirektionaler, breitbandiger Broadcastkanal ausgebildet sein. Wenigstens ein Broadcastkanal kann dabei vorteilhaft als digitaler Rundfunkkanal, insbesondere als DVB-T und/oder DVB-H - Kanal ausgebildet sein.

In weiterer Ausgestaltung können die Übertragungsdaten und/oder Servicedaten und/oder Echtzeitdaten und/oder virtuellen Zeitdaten von der Anbieterseite über wenigstens einen Interaktionskanal, insbesondere einen bidirektionalen Interaktionskanal, auf die wenigstens eine Endeinrichtung übertragen werden. Ebenso ist die Erfindung nicht auf bestimmte Typen von Interaktionskanälen beschränkt. Beispielsweise kann wenigstens ein Interaktionskanal als bidirektionaler Kanal ausgebildet sein. Wenigstens ein Interaktionskanal kann vorzugsweise als Telekommunikationskanal, insbesondere als Mobilfunkkanal, ausgebildet sein. Der Interaktionskanal ist dann Bestandteil eines Telekommunikationsnetzes, etwa eines Mobilfunknetzes nach dem GSM (Global System for Mobile Communication)-, GPRS (General Packet Radio Service)- oder UMTS (Universal Mobile Telecommunication System)-Standard.

Beispielsweise kann vorgesehen sein, dass die Servicedaten und/oder Echtzeitdaten und/oder virtuellen Zeitdaten in demselben Übertragungskanal oder in demselben Übertragungskanaltyp übertragen werden, in dem auch die Übertragungsdaten übertragen werden. In anderer Ausgestaltung kann vorgesehen sein, dass die Servicedaten und/oder Echtzeitdaten und/oder virtuellen Zeitdaten in einem anderen Übertragungskanal als die Übertragungsdaten übertragen werden.

Wie weiter oben schon ausgeführt wurde, kann auf der Anbieterseite vorteilhaft wenigstens eine Rechnereinrichtung vorgesehen sein, wobei die Übertragungsdaten und/oder Servicedaten und/oder Echtzeitdaten und/oder virtuellen Zeitdaten von der wenigstens einen Rechnereinrichtung auf die wenigstens eine Endeinrichtung übertragen werden. Dabei kann in der Rechnereinheit vorteilhaft automatisch ermittelt werden, ob und/oder welche Daten über einen Broadcastkanal oder über einen Interaktionskanal übertragen werden.

Vorteilhaft ist vorgesehen, dass die Datenübertragung auf zwei oder mehr Übertragungsebenen stattfindet, dass auf einer ersten Übertragungsebene Übertragungsdaten über wenigstens einen Übertragungskanal, insbesondere einen Broadcastkanal, auf die Endeinrichtung(en) übertragen werden, dass zumindest temporär wenigstens eine interaktive Funktionalität, insbesondere eine Verlinkung zu wenigstens einer weiteren Übertragungsebene vorgesehen ist, dass über eine Aktivierung der interaktiven Funktionalität eine Verzweigung von der ersten Übertragungsebene in wenigstens eine weitere Übertragungsebene herbeigeführt wird und dass nach der Aktivierung der interaktiven Funktionalität über wenigstens einen Übertragungskanal, insbesondere wenigstens einen Broadcastkanal und/oder wenigstens einen Interaktionskanal, eine Datenübertragung auf der wenigstens einen weiteren Übertragungsebene stattfindet.

Auf einer ersten Ebene werden Broadcastdaten über wenigstens einen Broadcastkanal (von der Anbieterseite) auf die Endeinrichtung(en) (auf der Nutzzerseite) übertragen. Das kann vorteilhaft in der bisher bekannten Weise mittels "Streaming" erfolgen.

Zumindest temporär ist wenigstens eine interaktive Funktionalität vorgesehen. Dabei kann es sich insbesondere um eine Verlinkung zu wenigstens einer weiteren Übertragungsebene handeln. Dies kann beispielsweise mittels eines interaktiven Buttons oder dergleichen realisiert werden, wobei die Erfindung nicht auf bestimmte Ausgestaltungsformen für die interaktive Funktionalität beschränkt ist. Interaktiv soll in diesem Fall bedeuten, dass der Nutzer in die Lage versetzt wird, von sich aus zu agieren, sprich die Funktionalität in Gang zu setzen.

Beispielsweise kann die wenigstens eine interaktive Funktionalität zumindest temporär über den Broadcastkanal übertragen werden. Es ist auch denkbar, dass die interaktive Funktionalität zumindest temporär Bestandteil der in der ersten Übertragungsebene übertragenen Broadcastdaten ist. Allerdings ist die Erfindung nicht auf die beiden genannten Beispiele beschränkt. Beispielsweise kann nämlich auch vorgesehen sein, dass die die Verlinkung herbeiführende interaktive Funktionalität in der Endeinrichtung implementiert ist. So kann etwa vorgesehen sein, dass die interaktive Funktionalität fest in der Endeinrichtung - beispielsweise als Button oder dergleichen - integriert ist. Natürlich ist es auch denkbar, dass die interaktive Funktionalität Bestandteil einer auf der Endeinrichtung befindlichen Klienten-Applikation ist. Die letztgenannte Ausführung hat den Vorteil, dass sich die interaktive Funktionalität nur dann auf der Endeinrichtung befindet, wenn der Nutzer die dazugehörige Applikation auch tatsächlich nutzt.

Über eine Aktivierung der interaktiven Funktionalität wird dann elektronisch und vorzugsweise automatisch eine Verzweigung von der ersten Übertragungsebene in wenigstens eine weitere Übertragungsebene herbeigeführt. Anschließend findet - nach der Aktivierung der interaktiven Funktionalität - in der wenigstens einen weiteren Übertragungsebene - beispielsweise über wenigstens einen Broadcastkanal und/oder über wenigstens einen Interaktionskanal - eine Datenübertragung statt. Wie dies im Einzelnen erfolgen kann, wird anhand nicht ausschließlicher Beispiele im Folgenden beschrieben.

Durch diese Übertragungsform werden verschiedene Übertragungsebenen kombiniert und miteinander verknüpft. Das bringt eine Reihe von Vorteilen mit sich, wie anhand eines konkreten Beispiels verdeutlicht wird. Dabei soll das Beispiel aus dem Bereich der Übertragung von TV-Inhalten lediglich dazu dienen, die generelle Funktionsweise des Verfahrens zu verdeutlichen. Es ist selbstverständlich, dass das Verfahren nicht auf dieses konkrete Einsatzfeld beschränkt ist. Mit dem erfindungsgemäßen Verfahren können nunmehr verschiedene Nutzerwünsche bedient werden. Beispielsweise gibt es passive Nutzer, die nur eine TV-Programm ansehen und konsumieren wollen. Diese werden nach wie vor über den Broadcastkanal der ersten Übertragungsebene bedient. Dann gibt es Nutzer, die aktiv an einem gesendeten TV-Inhalt teilnehmen wollen, beispielsweise indem Sie bezüglich der gesendeten TV-Inhalte interagieren wollen, etwa indem sie ihre Meinung dazu kundtun oder dergleichen. Über die Aktivierung der interaktiven Funktionalität könnte der Nutzer dann agieren. Schließlich gibt es auch solche Nutzer, die zu einem gesendeten TV-Inhalt möglichst rasch eine umfassende Möglichkeit der Interaktion haben möchten, indem sie beispielsweise möglicht viele Zusatzinformationen zu dem gesendeten TV-Inhalt erhalten und diese anschließend auf ihrer Endeinrichtung lokal abspeichern möchten. Auch dies ist mit dem erfindungsgemäßen Verfahren realisierbar, beispielsweise über ein Streaming von Broadcastdaten mit einer interaktiven Funktionalität, die bei Aktivierung eine Verzweigung in eine Übertragungsebene mit Downloadmöglichkeit zulässt.

Vorteilhaft kann über eine Aktivierung der wenigstens einen interaktiven Funktionalität eine Verzweigung von der ersten Übertragungsebene in eine zweite Übertragungsebene herbeigeführt werden, wobei nach der Aktivierung der wenigstens einen interaktiven Funktionalität über wenigstens einen Broadcastkanal und/oder wenigstens einen Interaktionskanal eine Datenübertragung auf der zweiten Übertragungsebene stattfindet.

Weiterhin kann vorgesehen sein, dass auch für die in der zweiten Übertragungsebene übertragenen Daten zumindest temporär wenigstens eine interaktive Funktionalität, insbesondere eine Verlinkung zu wenigstens einer weiteren Übertragungsebene, vorgesehen ist, dass über eine Aktivierung der wenigstens einen interaktiven Funktionalität eine Verzweigung von der zweiten Übertragungsebene in wenigstens eine weitere Übertragungsebene herbeigeführt wird und dass nach der Aktivierung der wenigstens einen interaktiven Funktionalität über wenigstens einen Broadcastkanal und/oder wenigstens einen Interaktionskanal eine Datenübertragung auf der wenigstens einen weiteren Übertragungsebene stattfindet.

Auch in diesem Fall kann die wenigstens eine interaktive Funktionalität beispielsweise zumindest temporär über einen Kanal der zweiten Übertragungsebene übertragen werden oder zumindest temporär Bestandteil von in der zweiten Übertragungsebene übertragenen Daten sein. Natürlich sind auch andere Ausgestaltungen denkbar, so dass bezüglich der hier beschriebenen interaktiven Funktionalität auf die Ausführungen zu der interaktiven Funktionalität weiter oben vollinhaltlich Bezug genommen und hiermit verwiesen wird.

Der Ablauf des Verfahrens erfolgt dabei in der wie oben beschriebenen Weise, wobei noch einmal betont wird, dass die Erfindung nicht auf eine bestimmte Anzahl von Übertragungsebenen beschränkt ist. Ebenso kann eine Verlinkung der unterschiedlichen Übertragungsebenen in jeder beliebigen Weise erfolgen. Es ist nicht unbedingt erforderlich, dass eine Verlinkung von einer Übertragungsebene nur zu einer benachbarten, direkt darunter oder darüber liegenden Übertragungsebene erfolgt. Vielmehr soll es möglich sein, dass von jeder Übertragungsebene eine Verlinkung zu jeder anderen Übertragungsebene realisiert werden kann, sofern dies gewünscht ist.

Nachfolgend wird eine vorteilhafte Ausgestaltung beschrieben. Dabei kann vorzugsweise vorgesehen sein, dass die Übertragung von Daten auf drei Übertragungsebenen stattfindet, dass auf der ersten Übertragungsebene Daten in Form von Broadcastdaten übertragen werden, dass zumindest temporär wenigstens eine interaktive Funktionalität, insbesondere eine Verlinkung in eine zweite Übertragungsebene, vorgesehen ist, dass auf der zweiten Übertragungsebene Daten in Form von Broadcastdaten und/oder in Form von zusätzlichen Informationsdaten übertragen werden, dass zumindest temporär wenigstens eine interaktive Funktionalität, insbesondere eine Verlinkung in eine dritte Übertragungsebene, vorgesehen ist und dass auf der dritten Übertragungsebene Daten in Form von Downloaddaten übertragen werden.

Bei dieser Ausführungsform des Verfahrens findet in der ersten Übertragungsebene eine Übertragung von Broadcastdaten vorzugsweise nach dem Prinzip des "Streamings" statt. In der darunter liegenden zweiten Übertragungsebene erfolgt eine Übertragung von Broadcastdaten und/oder eine Interaktion, so dass in dieser zweiten Übertragungsebene ein interaktives "Streaming" von Inhalten stattfinden kann. In der untersten, dritten Übertragungsebene findet dann ein Download von den vom Nutzer gewünschten Daten statt. Je nach Ausgestaltung können die Downloaddaten über wenigstens einen Broadcastkanal und/oder über wenigstens einen Interaktionskanal bereitgestellt werden.

Vorteilhaft kann über eine Aktivierung wenigstens einer interaktiven Funktionalität, insbesondere einer Verlinkung, eine Verzweigung von einer Übertragungsebene zur Übertragung von Broadcastdaten in wenigstens eine Übertragungsebene mit Möglichkeit zur Interaktion zwischen der Anbieterseite und der Nutzerseite herbeigeführt werden. In dieser Übertragungsebene muss der Nutzer nicht länger bloßer Konsument von angebotenen Daten bleiben. Vielmehr kann er im Hinblick auf die übertragenen Daten selbst aktiv werden, beispielsweise, indem er bezüglich der übertragenen Broadcastdaten weitergehende Informationen bestellt, einen Kommentar abgibt oder dergleichen. Dabei kann vorgesehen sein, dass in wenigstens einer der Übertragungsebenen Daten in Form von interaktiven Inhalten übertragen werden. Dies sind Daten, mit denen eine Interaktion ermöglicht wird, beziehungsweise die eine Interaktion ermöglichen. Weiterhin kann auch vorgesehen sein, dass in wenigstens einer der Übertragungsebenen Daten in Form von Broadcastdaten und Daten in Form von interaktiven Inhalten übertragen werden. Dabei ist nicht vorgeschrieben, dass die Übertragung interaktiver Daten über bestimmte Kanaltypen erfolgen muss. So kann beispielsweise vorgesehen sein, dass die Daten in Form von interaktiven Inhalten über wenigstens einen Broadcastkanal übertragen werden. Ebenso kann vorgesehen sein, dass die Daten in Form von interaktiven Inhalten über wenigstens einen Interaktionskanal übertragen werden. Einige nicht ausschließliche Beispiele werden im weiteren Verlauf erläutert.

In weiterer Ausgestaltung können in der wenigstens einen weiteren Übertragungsebene zusätzliche Informationsdaten - beispielsweise Spezialinformationen - zu den über den Broadcastkanal übertragenen Broadcastdaten übertragen werden.

Vorteilhaft kann die Aktivierung einer interaktiven Funktionalität, insbesondere einer Verlinkung, über wenigstens einen Interaktionskanal erfolgen.

Vorzugsweise können bei einer Kommunikation vom Nutzer in Richtung des Anbieters Daten über wenigstens einen Interaktionskanal von der Nutzerseite auf die Anbieterseite übertragen werden.

Nachfolgend wird zur Verdeutlichung des allgemeinen Erfindungsgedankens ein konkretes Beispiel beschrieben, ohne dass die Erfindung auf dieses Beispiel beschränkt ist. Bei diesem Beispiel soll die Übertragung von Daten auf insgesamt drei Übertragungsebenen stattfinden.

In der ersten Übertragungsebene erfolgt die Übertragung von Broadcastdaten über wenigstens einen Broadcastkanal. Hier findet eine grobe Datenverteilung an alle Nutzer statt. Aus dieser ersten Übertragungsebene soll in eine zweite, darunter liegende Übertragungsebene verzweigt werden können. Dazu ist - beispielsweise in den übertragenen Broadcastdaten - eine interaktive Funktionalität in Form einer Verlinkung (ein interaktiver Button, eine IP-Adresse oder dergleichen) vorgesehen, die je nach Datenformat temporär oder dauerhaft zur Verfügung steht.

Im vorliegenden Beispiel sollen über den Broadcastkanal TV-Inhalte übertragen werden.

Beispielsweise kann vorgesehen sein, dass der TV-Inhalt nach der Verzweigung von der ersten in die zweite Übertragungsebene ein anderes Formatfenster aufweist. Beispielsweise könnte vorgesehen sein, dass der ursprüngliche TV-Inhalt weiterhin gezeigt wird, dass aber in der zweiten Übertragungsebene auch noch zusätzliche Informationen zum TV-Inhalt übertragen werden. Auch ist es denkbar, dass die ursprünglichen TV-Inhalte in der zweiten Übertragungsebene nicht mehr angezeigt werden, sondern dass nur noch Audioinformationen übertragen werden. Ebenso ist natürlich auch denkbar, dass die TV-Inhalte aus der ersten Übertragungsebene in der zweiten Übertragungsebene komplett ausgeblendet werden und nur noch die Zusatzinformationen angezeigt werden. Die geeignete Darstellung der Informationen ergibt sich in erster Linie nach Art und Größe der in der Endeinrichtung zur Verfügung stehenden Anzeigeeinrichtung, beispielsweise eines Displays.

Die zusätzlichen Informationen können, wenn es sich etwa um allgemeine Informationen handelt, über einen Broadcastkanal übertragen werden. Wenn es sich etwa um Spezialinformationen handelt, die gewöhnlich nur sehr selten oder nur von wenigen Nutzern abgefragt werden, können die Zusatzinformationen beispielsweise über einen Interaktionskanal übertragen werden.

Bei der Übertragung von Broadcastdaten handelt es sich in der Regel immer um einen "Massenversand" von Daten. Wenn in der zweiten Übertragungsebene vom Nutzer über seine Endeinrichtung eine Interaktion ausgelöst wird, kann beispielsweise ein Interaktionskanal ins Spiel kommen. Dabei kann eine auf der Anbieterseite vorgehaltene Rechnereinrichtung vorteilhaft intelligent und automatisch entscheiden, ob Daten über einen Broadcastkanal oder aber über einen Interaktionskanal übertragen werden sollen. Die Auswahl könnte beispielsweise von der Anzahl der zu einem bestimmten TV-Inhalt von der Nutzerseite übertragenen Anfragen oder Anforderungen abhängen.

Ebenso ist es möglich, dass über einen oder mehrere Broadcastkanal/kanäle verschiedene Gruppen von Informationen simultan übertragen werden. Über eine Interaktion kann dann eine bestimmte Gruppe von Informationen für eine Endeinrichtung freigeschaltet werden.

In der zweiten Übertragungsebene könnte im interaktiven Bereich beispielsweise auch eine Möglichkeit zum Download von Daten angeboten werden. Wiederum kann eine interaktive Funktionalität, insbesondere in Form einer Verlinkung, vorgesehen sein, die vom Nutzer aktiviert werden kann. Nach Aktivierung der Verlinkung wird automatisch in eine weitere, dritte Übertragungsebene verzweigt, in welcher dann der Download der Informationen ermöglicht wird.

Je nach Ausgestaltung kann der Download über einen Broadcastkanal oder einen Interaktionskanal angeboten werden. Angenommen, in der zweiten Übertragungsebene wird ein "Fan-Paket" zu einem übertragenen TV-Inhalt, beispielsweise einem Musikvideo, angeboten. Nun kann man davon ausgehen, dass kurz nach diesem Angebot eine große Anzahl von Nutzern darauf zugreifen wird. In diesem Fall könnte man den Download daher zunächst über einen Broadcastkanal zur Verfügung stellen, was wesentlich kostengünstiger ist. Wenn dann ein Nutzer erst zu einem späteren Zeitpunkt auf das Angebot zugreifen möchte, kann dieses natürlich jederzeit und individuell über einen Interaktionskanal zur Endeinrichtung des betreffenden Nutzers übertragen werden.

Durch das erfindungsgemäße Verfahren kann sich der Anbieter jederzeit an die Wünsche der Nutzer anpassen. Ebenso kann jeder Nutzer frei entscheiden, welche Art von Informationen er wann übertragen bekommen möchte. Wenn die Informationen über einen Broadcastkanal übertragen werden, ist dies in der Regel kostengünstiger. Allerdings steht die Information aufgrund der Übertragung nach dem Prinzip des Datenkarussells nur zu bestimmten Zeiten zur Verfügung, was für den Nutzer Wartezeiten bedeutet. Will er diese Wartezeiten nicht in Kauf nehmen, kann er die gewünschten Daten jederzeit über einen Interaktionskanal übertragen bekommen.

Gemäß einem weiteren Aspekt wird ein hybrides Netzwerk bereitgestellt, aufweisend wenigstens ein Broadcastnetzwerk mit wenigstens einem Broadcastkanal zum Übertragen von Übertragungsdaten von der Anbieterseite auf wenigstens eine Endeinrichtung auf der Nutzerseite, sowie ein Kommunikationsnetzwerk mit wenigstens einem Interaktionskanal zur Interaktion zwischen der Nutzerseite und der Anbieterseite. Das hybride Netzwerk ist erfindungsgemäß **dadurch gekennzeichnet,** dass es Mittel zur Durchführung des wie vorstehend beschriebenen erfindungsgemäßen Verfahrens aufweist. Zu den Vorteilen, Merkmalen, Wirkungen sowie der Funktionsweise des erfindungsgemäßen hybriden Netzwerks wird daher auf die vorstehenden Ausführungen zum erfindungsgemäßen Verfahren vollinhaltlich Bezug genommen und hiermit verwiesen.

Mittels der vorliegenden Erfindung wird es möglich, die vorstehend beschriebenen Übertragungsverfahren in einem hybriden Netzwerk im Hinblick auf eine maximale Kosten- und Ressourceneffizienz bei gleichzeitig maximalem Endnutzerkomfort zu kombinieren. Dabei wird zunächst die kosteneffiziente Eigenschaft des Broadcast, nämlich das Aussenden von Informationen an alle Teilnehmer, beibehalten. Diese Broadcast-Eigenschaft wird mit weiteren Übertragungsebenen des "Streaming" und/oder "Download" gekoppelt. Dennoch kann mit der vorliegenden Erfindung eine Flexibilität bei der Adressierung verschiedener Nutzerbedürfnisse und bei der Ausgestaltung verschiedener Dienste, erreicht werden.

Mit der vorliegenden Erfindung in Form des erfindungsgemäßen Verfahrens sowie in Form des erfindungsgemäßen hybriden Netzwerks wird eine Übertragung von vorzugsweise mobilen, elektronischen Informations- und Unterhaltungsdiensten möglich, die eine breitbandige, kosteneffiziente Datenverteilung an viele Nutzer, beispielsweise über ein digitales Rundfunknetz wie DVB-T, mit der individuellen, abrechenbaren, interaktiven Übertragung über ein Kommunikationsnetze, insbesondere über ein Mobilfunknetz (GSM/GPRS/UMTS), kombinieren.

Die vorliegende Erfindung optimiert die Effizienz des Übertragungsverfahrens. Für den Inhalteanbieter und Netzbetreiber werden Übertragungskosten und -ressourcen, abhängig von der Zahl und den Bedürfnissen der gleichzeitig adressierten Endnutzer optimiert. Dafür wird beispielsweise ein kosten- und ressourceneffizientes Streaming über das Rundfunknetz für viele passive Nutzer verwendet, sowie ein Download über das Rundfunknetz für proaktiv interessierte und zur Mehrzahlung bereite Nutzer, während die Datenübertragung über das interaktive Netz, zum Beispiel ein Mobilfunknetz, zur Abrechnung und Individualisierung beziehungsweise Sicherstellung der vollständigen Übertragung dient.

Die vorliegende Erfindung stellt somit auch ein Verfahren zur Koordinierung beziehungsweise zur Optimierung der Übertragung von Daten im Zusammenwirken von dem "synchronen-" und dem "store-and-forward-Fall" via DVB-T/H und interaktivem mobilen Rückkanal, unter der Berücksichtigung von begrenzter Bandbreite (Breitband- und mobiler Kanal), begrenzten Energieressourcen, begrenzter Darstellungsfähigkeit auf der insbesondere mobilen Endeinrichtung und unter Berücksichtigung des Nutzer- beziehungsweise des Streaming-Sende-Verhaltens dar.

Die Übertragung von Daten findet vorzugsweise über Rechnereinrichtungen (Server) im Hintergrundsystem auf zu empfangende interaktive mobile Klienten-Applikationen statt, welche sich a-priori auf der mobilen Endeinrichtung befinden oder mit Hilfe des erfindungsgemäßen Verfahrens auf die mobile Endeinrichtung transferiert wurden. Die übertragenen Daten bestehen vor allem aus Applikationen, Content-Daten und Meta-Daten, welche die Content-Daten beschreiben.

Wenigstens eine dieser interaktiven mobilen Klienten-Applikationen ist in der Lage gleichzeitig TV ähnliche Streaming-Inhalte und zeitsynchrone Daten zu empfangen und interaktiv mit der Rechnereinrichtung im Hintergrundsystem zusammenzuarbeiten (synchroner Fall). Wie oben erwähnt kann die interaktive mobile Klienten-Applikation andere interaktive Zusatz-Applikationen inklusive Content- und Meta-Daten empfangen, welche auf der Endeinrichtung, nach dem Herunterladen, ausgeführt werden können (store-and-forward Fall). Diese interaktiven Zusatz-Applikationen werden in der Regel fortwährend periodisch mit aktuellen Content- und Meta-Daten versorgt.

Das Herunterladen der interaktiven Zusatz-Applikation oder aber von Daten jedweder Art kann via Breitband oder via interaktivem mobilem Rückkanal (GPRS/UMTS) erfolgen. Diese Entscheidung wird vorteilhaft in Abhängigkeit der Wirtschaftlichkeit getroffen. Dies kann beispielsweise auf der Anbieterseite, beispielsweise in der wenigstens einen Rechnereinrichtung erfolgen.

Gemäß der vorliegenden Erfindung kann von verschiedenen Annahmen zum Nutzerverhalten ausgegangen werden. Ein Nutzer wird sich im Wesentlichen durch zwei Möglichkeiten animieren lassen, eine interaktive mobile Klienten-Applikationen auszuwählen. Zum einem durch das Lesen/Studieren der Servicedaten-Datei (beispielsweise des EPG oder des ESG), welche ihn über die Inhalte und Zeiten der übertragenen Daten sowie über zusätzliche Inhalte, beispielsweise zusätzliche mobile Dienste und dergleichen, informiert. Eine andere Möglichkeit der Animierung stellt die interaktive Werbung dar. Interaktive Werbung funktioniert in der Regel wie folgt. Ein Nutzer sieht beispielsweise einen Musik-Kanal und wird über eine Musik-Star-Applikation informiert/beworben. Die Musik-Star-Applikation ist eine interaktive mobile Klienten-Applikation, welche Informationen über den gewünschten Musik-Star aktualisiert enthält. Entscheidet sich der Nutzer für die Musik-Star-Applikation, beispielsweise durch Aktivierung einer interaktiven Funktionalität - etwa durch Klicken von gewissen Tasten - oder dergleichen, dann kann das Herunterladen der Musik-Star-Applikation entweder sofort via dem mobilen Interaktionskanal erfolgen oder die mobile Endeinrichtung kann sich für das Herunterladen, beispielsweise via DVB-H Broadcast, dieser Musik-Star-Applikation registrieren. Bei dem Herunterladen via DVB-H Broadcast sollte der Broadcast der Musik-Star-Applikation vorzugsweise relativ zeitnah erfolgen, damit der Nutzer nicht gelangweilt wird. Hat der Nutzer die Musik-Star-Applikation auf seiner Endeinrichtung, so wird diese zu gewissen Zeiten, vorzugsweise via DVB-H Broadcast, mit aktuellen Inhaltsdaten versorgt.

Folglich besitzt man nun die Möglichkeit, Streams mit zeitsynchronen Daten und weiteren zusätzlichen Daten (interaktiven mobilen Klienten-Applikationen) zu übertragen und dabei den mobilen Randbedingungen bezüglich eines schonenden Umgangs mit Ressourcen Rechnung zu tragen.

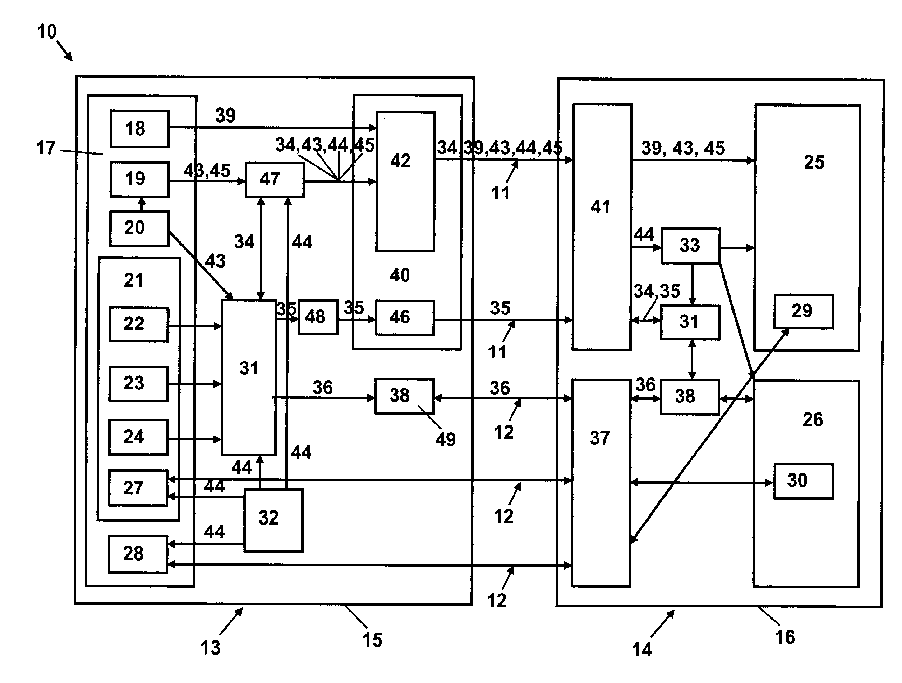

Die Erfindung wird nun anhand eines Ausführungsbeispiels unter Bezugnahme auf die beiliegende Zeichnung näher erläutert. Dabei zeigt die einzige Figur in schematischer Darstellung ein hybrides Netzwerk, in dem das erfindungsgemäße Verfahren abläuft.

In der Figur ist ein hybrides Netzwerk 10 dargestellt, bestehend aus einem Broadcastnetzwerk mit wenigstens einem Übertragungskanal, bei dem es sich um einen unidirektionalen, breitbandigen Broadcastkanal 11 handelt. Weiterhin besteht das hybride Netzwerk 10 aus einem Kommunikationsnetzwerk, insbesondere einem Mobilfunknetz. Das Kommunikationsnetzwerk weist wenigstens einen Interaktionskanal 12 auf, bei dem es sich im vorliegenden Beispiel um einen bidirektionalen Übertragungskanal handelt, etwa einen Übertragungskanal nach dem GPRS/UMTS-Standard.

Über die Übertragungskanäle 11, 12 werden Daten zwischen der Anbieterseite 13 und der Nutzerseite 14 ausgetauscht. Dazu ist auf der Anbieterseite 13 wenigstens eine Rechnereinrichtung 15 vorgesehen, während auf der Nutzerseite wenigstens eine einem Nutzer zugeordnete Endeinrichtung 16, im vorliegenden Fall eine mobile Endeinrichtung, vorgesehen ist. Üblicherweise ist im hybriden Netzwerk 10 eine ganze Reihe von Endeinrichtungen 16 vorgesehen.

Auf der Anbieterseite 13 ist eine Prozessoreinrichtung 17 zur Erzeugung der Inhalte vorgesehen. Hierbei handelt es sich um eine Abstraktion eines Streaming Breitbandkanals, welcher auf die mobile Endeinrichtung 16 via DVB-T/H ausgestrahlt wird. In der Prozessoreinrichtung werden Übertragungsdaten erzeugt und/oder bereitgestellt, die über den Broadcastkanal 11 auf die Endeinrichtung(en) 16 übertragen werden. Die Übertragungsdaten bestehen im vorliegenden Beispiel aus einem Stream von Inhaltsdaten 18 und den dazugehörigen zeitsynchronen Daten 19 und Meta-Daten 20, welche die Anwendung der zeitsynchronen Daten beschreiben (beispielsweise Layout-Informationen und dergleichen).

Die Prozessoreinrichtung 17 kann zusätzlich mehrere interaktive mobile Klienten-Applikationen 21 zum Herunterlanden bereithalten (vergleiche das in der allgemeinen Beschreibung genannte Beispiel bezüglich einer Musik-Star-Applikation). Im vorliegenden Fall handelt es sich hierbei um die eigentliche interaktive mobile Klienten-Applikation 22, interaktive mobile Inhaltsdaten 23 und interaktive mobile Meta-Daten 24.

Um diese Übertragungsdaten von der Anbieterseite 13 auf einer mobilen Endeinrichtung 16 empfangen, darstellen und verwenden zu können, benötigt der Nutzer auf seiner Endeinrichtung 16 eine mobile Streaming Klienten-Applikation sowie eine interaktive mobile Klienten-Applikation 26. Die mobile Streaming Klienten-Applikation 25 ist in der Lage, Streams und zeitsynchrone Daten anzuzeigen und eine Interaktion mit der Rechnereinrichtung 15 durchzuführen. Mit der interaktiven mobilen Klienten-Applikation 26 kann der Nutzer mit der Prozessoreinrichtung 17 über den GPRS/UMTS-Interaktionskanal 12 interagieren. Die Nutzer Session wird durch geeignete Session-Komponenten 27, 28, 29, 30 reflektiert.

Die interaktiven Klienten-Applikationen 21 werden zum Herunterladen bereitgehalten. Sie bestehen aus der interaktiven mobilen Klienten-Applikation 22 selbst und den benötigten Content-Daten (Inhaltsdaten) 23 und dazugehörigen Meta-Daten 24, welche die Anwendung der Content-Daten 23 beschreiben. Mit dieser mobilen Klienten-Applikation 21 kann der Nutzer über den GPRS/UMTS-Interaktionskanal 12 interagieren.

Die mobile Endeinrichtung benötigt eine so genannte Servicedaten-Datei 31, beispielsweise einen EPG (Electronic Program Guide) oder einen ESG (Electronic Service Guide), welche im Wesentlichen einer elektronischen TV-Zeitschrift entspricht. Die Servicedaten 31 werden auf der Anbieterseite 13 erzeugt und über den Broadcastkanal 11 und/oder den Interaktionskanal 12 auf die Endeinrichtung 16 übertragen. Dort werden die Servicedaten 31 in der Servicedaten-Datei abgespeichert, so dass sie für den Nutzer jederzeit abrufbar sind. In regelmäßigen Zeitabständen, oder aber bei besonderen Ereignissen (etwa wenn kurzfristig eine Programmänderung vorgenommen wird), wird die Servicedaten-Datei 31 aktualisiert.

Die Servicedaten 31 können durch weitere Informationen angereichert werden, wie beispielsweise zu welchen Zeiten und an welchen Tagen zusätzliche interaktive mobile Klienten-Applikationen 21 auf die mobile Endeinrichtung 16 übertragen werden können oder zu welchen Zeiten und an welchen Tagen Content- und Meta-Daten 23, 24 für die zusätzlichen interaktiven mobilen Klienten-Applikationen 22 empfangen werden können.

Durch den Einsatz der Servicedaten 31 ist es möglich, die Endeinrichtungen 16 energiesparend zu betreiben. Da die Informationen der Servicedaten-Datei 31 auch in der Endeinrichtung 16 vorliegen, muss die Endeinrichtung 16 immer nur dann aktiviert werden, wenn solche Übertragungsdaten übertragen werden, die von dem Nutzer aus den auf seiner Endeinrichtung 16 befindlichen Servicedaten zuvor ausgewählt worden sind.

Vorteilhaft können auf der Anbieterseite 13 virtuelle Zeitdaten erzeugt und auf die wenigstens eine Endeinrichtung 16 auf der Nutzerseite übertragen werden, wobei die virtuellen Zeitdaten auf die Übertragungsdaten bezogene Zeitdaten darstellen und wobei die virtuellen Zeitdaten in der wenigstens einen Endeinrichtung 16 empfangen und in dieser automatisch fortgezählt werden.

Die virtuelle Zeit wird in einem entsprechenden Generator 32 auf der Anbieterseite 13, beispielsweise in der Rechnereinrichtung 15, erzeugt. Die virtuelle Zeit wird benötigt, um logisch die Laufzeitunterschiede bei der Übertragung von Daten über den Übertragungskanal auszugleichen.

Neben dem Generator 32 der virtuellen Zeit auf der Anbieterseite 13 ist in der Endeinrichtung 16 auf der Nutzerseite 14 ein Empfänger 33 für die virtuelle Zeit vorgesehen. Dieser empfängt die virtuelle Zeit und zählt die virtuelle Zeit selbstständig fort.

Vorteilhaft kann in den vorgenannten Fällen vorgesehen sein, dass die virtuellen Zeitdaten aus einem Zeitpaar bestehen, wobei ein Teil des Zeitpaars aus Echtzeitdaten besteht und wobei der andere Teil des Zeitpaars aus den eigentlichen virtuellen Zeitdaten besteht. Die virtuelle Zeit besteht in diesem Fall aus dem Zeitpaar (real_time, virtual_time). Bei der Erzeugung auf der Anbieterseite 13, beispielsweise in der Rechnereinrichtung 15, ist die real_time = virtual_time. Werden die Daten mit dem Zeitpaar versendet und kommen in der Endeinrichtung 16 an, so wird real_time nicht mehr verändert, sondern nur noch die virtual_time genommen.

Der Empfänger 33 für die virtuelle Zeit in der Endeinrichtung 16 wird nach dieser Zeit gestellt und beispielsweise im normalen Sekundentakt hoch gezählt. Tritt ein Event in einer interaktiven Klienten-Applikationen auf, so wird dieses mit dem Zeitpaar als Parameter versehen. Werden Event-Daten von der Endeinrichtung 16 zur Anbieterseite 13, beispielsweise zur Rechnereinrichtung 15, übertragen, so wird das Zeitpaar mit übertragen. Damit kann auf der Anbieterseite 13 herausgefunden werden, wie lange die Sendedauer (und beispielsweise eine Überlegdauer beim Nutzer) war und vor allem, ob der Event noch rechzeitig innerhalb der vorgegebenen Überlegdauer war und dergleichen.

Nachfolgend wird der Verlauf einiger wesentlicher Datenströme beschrieben, wobei diese Datenströme durch Pfeile dargestellt und mit Bezugsziffern versehen sind.

Daten 34 sind Daten, welche aus Daten zur Ausführung der Applikation, Inhaltsdaten (Content-Daten) für die Applikation und Meta-Daten für die Applikation bestehen können. Wesentlich ist, dass diese Daten ebenfalls in Daten 35 übermittelt werden und dort auch wesentlich wichtiger sind. Die Daten 35 setzen sich zusammen aus Daten zur Ausführung der Applikation, Inhaltsdaten (Content-Daten) für die Applikation und Meta-Daten für die Applikation sowie aus Service-Informationen.

Daten 36 sind ähnlich wie die Daten 35. Lediglich die Meta Daten sind verändert. Diese beschreiben in diesem Fall den Download über den Interaktionskanal 12 und nicht das Ausstrahlen über den Broadcastkanal 11.

Zur Übertragung von Daten über den Interaktionskanal 12 weist die Endeinrichtung 16 einen entsprechenden Sender/Empfänger 37 (GPRS/UMTS Sender & Empfänger) auf. Weiterhin sind sowohl in der Rechnereinrichtung 15 auf der Anbieterseite 13 als auch in der Endeinrichtung 16 Mittel 38 zum Kodieren/Dekodieren der über den Interaktionskanal 12 übertragenen Daten vorgesehen. Auf der Anbieterseite 13 sind diese Mittel 38 Bestandteil eines Servers 49.

Die Daten 39 setzen sich aus den eigentlichen Übertragungsdaten, beispielsweise aus TV ähnlichen Streaming Daten, zusammen. Diese können durch verschiedene Codes codiert sein. Die Daten 39 beschreiben den synchronen Fall, das heißt Streaming und Daten werden gebündelt und gleichzeitig ausgestrahlt.

Zur Übertragung der Daten über den Broadcastkanal 11 ist in der Rechnereinrichtung 15 auf der Anbieterseite 13 eine Sendeinrichtung 40 vorgesehen. In der Endeinrichtung 16 ist ein entsprechender Empfänger 41 vorgesehen, der die Übertragungsdaten empfängt und gegebenenfalls dekodiert.

In der Sendeeinrichtung 40 sind Mittel 42 zur synchronen Datenübertragung vorgesehen, über die beispielsweise die Daten 39 übertragen werden.

Die Daten 43 setzen sich zusammen aus den Meta Daten, welche die synchronen Daten zum Streaming beschreiben. Diese Meta Daten enthalten beispielsweise Informationen, wie lange und in welcher Form (Farbe, Größe) Informationen auf der mobilen Endeinrichtung 16 dargestellt werden. Ebenso sind Service-Informationen enthalten, welche Auskunft über den Inhalt des TV ähnlichen Programms, deren interaktiven mobilen Klienten-Applikationen, Verschlüsselungsinformationen und dergleichen geben.

Die Daten 44 setzen sich zusammen aus der virtuellen Zeit. Die virtuelle Zeit wir im Generator 32 erzeugt. Die Daten 45 setzen sich zusammen aus den Synchronen Daten, welche zeitgleich zu dem TV ähnlichen Streaming dargestellt werden.

Die Sendeeinrichtung 40 bündelt die Daten 39 und Daten 34+43+44+45 zusammen und sendet diese im synchronen Fall über die Mittel 42 mit dem IPDC (IP Datacast Protocol) über den Broadcastkanal 11, beispielsweise via DVB-T, an die Endeinrichtung 16. Ebenso geschieht dies mit den Daten 35. Bei den Daten 35 soll es sich um solche Daten handeln, die auf der Endeinrichtung 16, nach dem Herunterladen, ausgeführt werden können (store-and-forward-Fall). Die nach dem Prinzip des Store-and-forward zu übertragenen Daten werden über entsprechende Mittel 46 übertragen, die ebenfalls in der Sendeeinrichtung 40 implementiert sind.

Wie oben schon beschrieben wurde, wird die virtuelle Zeit im Generator 32 erzeugt. Die virtuelle Zeit wird benötigt um logisch die Laufzeitunterschiede beim Senden über den Broadcastkanal 11 und den Interaktionskanal 12 auszugleichen. Die Sendeeinrichtung 40 kann Laufzeitunterschiede von etwa 10 Sekunden einnehmen. Ebenso kann der Interaktionskanal 12 (GPRS/UMTS Sender & Empfänger 37) Laufzeitunterschiede bis zu 30 Sekunden einnehmen. Hierbei kann vor allen die Initialisierungszeit inklusive Kostenprüfungen entsprechende Auswirkungen besitzen. Aus diesen Gründen ist es nicht möglich die reale Zeit zu verwenden, sondern es ist notwendig, eine virtuelle Zeit einzuführen

In einem Datenkarussell 47 für die synchrone Übertragung von Daten im synchronen Fall werden die Daten 43 + 44 + 45 gebündelt, was allerdings optional zu sehen ist wie bei den oben bereits erwähnen Daten 34. Auf ähnliche Weise werden im Store-and-Forward-Fall die Daten 35 in einem Datenkarussell 48 für die Store-and-Forward-Übertragung gebündelt.

Der Empfänger 33 empfängt die virtuelle Zeit und zählt die virtuelle Zeit selbstständig fort. Beispielsweise kann sich eine Streaming Klienten-Applikation 25 bei dem Empfänger 33 die aktuelle virtuelle Zeit holen.

Das im hybriden Netzwerk 10 ablaufende Verfahren sammelt die Service-Informationen von allen verfügbaren Übertragungskanälen ein. Damit ist bekannt, welcher Übertragungskanal zu welcher Zeit welchen Werbe-Trailer, welchen Film und dergleichen zeigt. Die Servicedaten 31 beschreiben ebenfalls, zu welchen Zeiten welche Streaming Klienten-Applikationen oder welche Content-Daten angeboten werden. Periodisch wird nun diese Service-Information via DVB-T/H oder immer aktualisiert auf dem Server 49 bereitgehalten. Diese Frequenz, mit der die Service-Informationen wiederholt werden, wird fest definiert und auf der mobilen Endeinrichtung 16 vorgehalten. Damit ist es möglich, Downloads durchzuführen, ohne das jeweilige Triggern des Nutzers zu benötigen. Wesentlich ist, dass die mobile Endeinrichtung weiß, wann welche Daten zur Verfügung stehen werden. Damit muss nicht gelauscht werden (Energieersparnis). Es wird keine komplette separate Bandbreite nur für Service-Informationen reserviert, statt dessen werden diese Informationen zu gewissen Zeiten für alle via DVB-T/H übertrage, beziehungsweise individuell via GPRS/UMTS zur Verfügung gestellt. Nach diesem Verfahren werden Streaming Klienten-Applikationen 25 vor allem relativ kurzzeitig nach der Ausstrahlung eines Werbe-Trailers oder während eines TV-Events ausgestrahlt. Die Nutzer registrieren sich interaktiv für den Download und bekommen dann kurze Zeit danach (eventuell 10 Sekunden) die Applikation (ohne oder mit rudimentären Daten) übertragen.

Informationen, welche in Echtzeit übertragen werden müssen (synchroner Fall), können ebenfalls mit diesem Ansatz separat neben dem Streaming ausgestrahlt werden. Übertragungskanal spezifische Änderungen und damit Änderungen der Service-Informationen können ebenfalls mit diesem Ansatz ausgestrahlt werden.

Übertragungskanal übergreifende Informationen oder große Content-Datenmengen werden nicht synchron zum Streaming ausgestrahlt sondern werden separat verbreitet (store-and-forward Fall). Folglich wird eine gewisse Bandbreite für Daten reserviert und diese kann von verschiedenen Kanälen zu verschiedenen Zeiten je nach den einzelnen Bedürfnissen verwendet werden. Es ist nicht wirtschaftlich, große Content-Mengen für wenige User über den DVB-T/H-Kanal 11 zu übertragen. In diesem Fall wird der GPRS/UMTS-Kanal 12 verwendet. Die mobile Endeinrichtung wird in diesem Fall versuchen, zunächst die Daten via DVB-T/H zu empfangen. Falls diese Daten nicht empfangen werden können (weil diese wie besprochen aus wirtschaftlichen Gründen nicht gesendet werden), so wird die mobile Endeinrichtung 16 je nach QoS-Einstellung den GPRS/UMTS-Kanal 12 verwenden und die Daten individuell downloaden.

Sollte eine Übertragung über den Broadcastkanal 11, beispielsweise via DVB-T/H, erfolgen und die Übertragung vereinzelt fehlerhaft sein, so können die defekten Daten über den Server 49 und den Interaktionskanal 12 auf die Endeinrichtung 16 herunter geladen und korrigiert werden.

### Bezugszeichenliste

- 10: Hybrides Netzwerk
- 11: Broadcastkanal
- 12: Interaktionskanal
- 13: Anbieterseite
- 14: Nutzerseite
- 15: Rechnereinrichtung
- 16: Endeinrichtung
- 17: Prozessoreinrichtung
- 18: Inhaltsdaten
- 19: zeitsynchrone Daten
- 20: Meta-Daten
- 21: interaktive Klienten-Applikation
- 22: eigentliche interaktive Klienten-Applikation
- 23: interaktive mobile Inhaltsdaten
- 24: interaktive mobile Meta-Daten
- 25: Streaming Klienten-Applikation
- 26: interaktive mobile Klienten-Applikation
- 27: Session-Komponente
- 28: Session-Komponente
- 29: Session-Komponente
- 30: Session-Komponente
- 31: Servicedaten
- 32: Genarator für die virtuelle Zeit
- 33: Empfänger für die virtuelle Zeit
- 34: Daten
- 35: Daten
- 36: Daten
- 37: GPRS/UMTS Sender & Empfänger
- 38: Mittel zum Kodieren/Dekodieren
- 39: Daten
- 40: Sendeeinrichtung
- 41: Empfänger
- 42: Mittel zur synchronen Datenübertragung
- 43: Daten
- 44: Daten
- 45: Daten
- 46: Mittel zur "Store-and-Forward"-Datenübertragung
- 47: Datenkarussell
- 48: Datenkarussell
- 49: Server

## Patentansprüche

1. Verfahren zum Übertragen von Daten in einem hybriden Übertragungsnetzwerk (10), aufweisend wenigstens ein Broadcastnetzwerk mit wenigstens einem als Broadcastkanal (11) ausgebildeten Übertragungskanal zum Übertragen von Übertragungsdaten von der Anbieterseite (13) auf wenigstens eine Endeinrichtung (14) auf der Nutzerseite (14), sowie ein Kommunikationsnetzwerk mit wenigstens einem als Interaktionskanal (12) ausgebildeten Übertragungskanal zur Interaktion zwischen der Nutzerseite (14) und der Anbieterseite (13), wobei über den Übertragungskanal (11, 12) von wenigstens einer Datenquelle auf der Anbieterseite (13) Übertragungsdaten zumindest zeitweilig zu wenigstens einer Endeinrichtung (16) auf der Nutzerseite (14) übertragen werden, **dadurch gekennzeichnet, dass** in einem Generator auf der Anbieterseite (13) virtuelle Zeitdaten (44) zum logischen Ausgleich von Laufzeitunterschieden bei der Übertragung von Daten über den Übertragungskanal (11, 12) erzeugt und auf die wenigstens eine Endeinrichtung (16) auf der Nutzerseite (14) übertragen werden, dass die virtuellen Zeitdaten (44) auf die Übertragungsdaten bezogene Zeitdaten darstellen und dass die virtuellen Zeitdaten (44) in der wenigstens einen Endeinrichtung (16) empfangen und in dieser automatisch fortgezählt werden.

2. Verfahren nach Anspruch 1, **dadurch gekennzeichnet, dass** von der Anbieterseite (13) weiterhin zumindest zeitweilig Echtzeitdaten auf die wenigstens eine Endeinrichtung (16) übertragen werden, und dass in der wenigstens einen Endeinrichtung (16) Zeit-Synchronisierungsmittel vorgesehen sind, über die in der wenigstens einen Endeinrichtung (16) abgelegte Zeitdaten mit den übertragenen Echtzeitdaten synchronisiert werden.

3. Verfahren nach Anspruch 1 oder 2, **dadurch gekennzeichnet, dass** die auf die wenigstens eine Endeinrichtung (16) übertragenen Übertragungsdaten auf dieser abgelegt und zumindest zeitweilig gespeichert werden.

4. Verfahren nach einem der Ansprüche 1 bis 3, **dadurch gekennzeichnet, dass** das Übertragungsnetzwerk (10) als hybrides Netzwerk ausgebildet ist, aufweisend ein Broadcastnetzwerk mit wenigstens einem Broadcastkanal (11) zum Übertragen von Übertragungsdaten von der Anbieterseite (13) auf wenigstens eine Endeinrichtung (16) auf der Nutzerseite (14), sowie ein Kommunikationsnetzwerk mit wenigstens einem Interaktionskanal (12) zur Interaktion zwischen der Nutzerseite (14) und der Anbieterseite (13), und dass Daten über den wenigstens einen Broadcastkanal (11) und/oder den wenigstens einen Interaktionskanal (12) übertragen werden.

5. Verfahren nach einem der Ansprüche 1 bis 4, **dadurch gekennzeichnet, dass** die Übertragungsdaten und/oder Servicedaten (31) und/oder Echtzeitdaten und/oder virtuellen Zeitdaten (44) von der Anbieterseite (13) über wenigstens einen Broadcastkanal (11), insbesondere einen unidirektionalen Broadcastkanal, auf die wenigstens eine Endeinrichtung (16) übertragen werden.

6. Verfahren nach einem der Ansprüche 1 bis 5, **dadurch gekennzeichnet, dass** die Übertragungsdaten und/oder Servicedaten (31) und/oder Echtzeitdaten und/oder virtuellen Zeitdaten (44) von der Anbieterseite (13) über wenigstens einen Interaktionskanal (12), insbesondere einen bidirektionalen Interaktionskanal, auf die wenigstens eine Endeinrichtung (16) übertragen werden.

7. Verfahren nach einem der Ansprüche 1 bis 6, **dadurch gekennzeichnet, dass** die Servicedaten (31) und/oder Echtzeitdaten und/oder virtuellen Zeitdaten (44) in demselben Übertragungskanal oder in demselben Übertragungskanaltyp übertragen werden, in dem auch die Übertragungsdaten übertragen werden.

8. Verfahren nach einem der Ansprüche 1 bis 7, **dadurch gekennzeichnet, dass** die Servicedaten (31) und/oder Echtzeitdaten und/oder virtuellen Zeitdaten (44) in einem anderen Übertragungskanal als die Übertragungsdaten übertragen werden.

9. Verfahren nach einem der Ansprüche 1 bis 8, **dadurch gekennzeichnet, dass** auf der Anbieterseite (13) wenigstens eine Rechnereinrichtung (15) vorgesehen ist, und dass die Übertragungsdaten und/oder Servicedaten (31) und/oder Echtzeitdaten und/oder virtuellen Zeitdaten (44) von der wenigstens einen Rechnereinrichtung (15) auf die wenigstens eine Endeinrichtung (16) übertragen werden.

10. Verfahren nach einem der Ansprüche 1 bis 9, **dadurch gekennzeichnet, dass** die virtuellen Zeitdaten (44) aus einem Zeitpaar bestehen, dass ein Teil des Zeitpaars aus Echtzeitdaten besteht und dass der andere Teil des Zeitpaars aus den eigentlichen virtuellen Zeitdaten besteht.

11. Verfahren nach einem der Ansprüche 1 bis 10, **dadurch gekennzeichnet, dass** die Datenübertragung auf zwei oder mehr Übertragungsebenen stattfindet, dass auf einer ersten Übertragungsebene Übertragungsdaten über wenigstens einen Übertragungskanal auf die Endeinrichtung(en) übertragen werden, dass zumindest temporär wenigstens eine interaktive Funktionalität vorgesehen ist, dass über eine Aktivierung der interaktiven Funktionalität eine Verzweigung von der ersten Übertragungsebene in wenigstens eine weitere Übertragungsebene herbeigeführt wird und dass nach der Aktivierung der interaktiven Funktionalität über wenigstens einen Übertragungskanal eine Datenübertragung auf der wenigstens einen weiteren Übertragungsebene stattfindet.

12. Verfahren nach Anspruch 11, **dadurch gekennzeichnet, dass** die Datenübertragung auf zwei oder mehr Übertragungsebenen stattfindet, dass auf einer ersten Übertragungsebene Übertragungsdaten über wenigstens einen Übertragungskanal in Form eines Broadcastkanals auf die Endeinrichtung(en) übertragen werden, dass zumindest temporär wenigstens eine interaktive Funktionalität in Form einer Verlinkung zu wenigstens einer weiteren Übertragungsebene vorgesehen ist, dass über eine Aktivierung der interaktiven Funktionalität eine Verzweigung von der ersten Übertragungsebene in wenigstens eine weitere Übertragungsebene herbeigeführt wird und dass nach der Aktivierung der interaktiven Funktionalität über wenigstens einen Übertragungskanal in Form eines Broadcastkanals und/oder wenigstens einen Interaktionskanals, eine Datenübertragung auf der wenigstens einen weiteren Übertragungsebene stattfindet.

13. Hybrides Netzwerk (10), aufweisend wenigstens ein Broadcastnetzwerk mit wenigstens einem Broadcastkanal (11) zum Übertragen von Übertragungsdaten von der Anbieterseite (13) auf wenigstens eine Endeinrichtung (14) auf der Nutzerseite (14), sowie ein Kommunikationsnetzwerk mit wenigstens einem Interaktionskanal (12) zur Interaktion zwischen der Nutzerseite (14) und der Anbieterseite (13), **dadurch gekennzeichnet, dass** dieses Mittel zur Durchführung des Verfahrens nach einem der Ansprüche 1 bis 12 aufweist.

## Claims

1. Method for data transmission in a hybrid transmission network (10), comprising at least one broadcast network with at least one transmission channel in the form of a broadcast channel (11) for transmitting transmission data from the provider end (13) to at least one terminal (14) at the user end (14), and a communications network with at least one transmission channel in the form of an interactive channel (12) for interaction between the user end (14) and the provider end (13), wherein transmission data are transmitted at least intermittently through the transmission channel (11, 12) from at least one data source at the provider end (13) to at least one terminal (16) at the user end (14), **characterised in that** virtual time data (44) for logically compensating run time differences during the transmission of data through the transmission channel (11, 12) are generated in a generator at the provider end (13) and are transmitted to the at least one terminal (16) at the user end (14), **in that** the virtual time data (44) constitute time data relating to the transmission data and **in that** the virtual time data (44) are received in the at least one terminal (16) and automatically continue to be counted therein.

2. Method according to claim 1, **characterised in that** at least intermittently real-time data are also transmitted from the provider end (13) to the at least one terminal (16), and in the at least one terminal (16) time synchronising means are provided, by means of which the time data stored in the at least one terminal (16) are synchronised with the real-time data transmitted.

3. Method according to claim 1 or 2, **characterised in that** the transmission data transmitted to the at least one terminal (16) are filed thereon and at least temporarily stored.

4. Method according to one of claims 1 to 3, **characterised in that** the transmission network (10) is in the form of a hybrid network, comprising a broadcast network with at least one broadcast channel (11) for transmitting transmission data from the provider end (13) to at least one terminal (16) at the user end (14), and a communications network with at least one interactive channel (12) for interaction between the user end (14) and the provider end (13), and **in that** data are transmitted through the at least one broadcast channel (11) and/or the at least one interactive channel (12).

5. Method according to one of claims 1 to 4, **characterised in that** the transmission data and/or service data (31) and/or real-time data and/or virtual time data (44) are transmitted from the provider end (13) through at least one broadcast channel (11), particularly a unidirectional broadcast channel, to the at least one terminal (16).

6. Method according to one of claims 1 to 5, **characterised in that** the transmission data and/or service data (31) and/or real-time data and/or virtual time data (44) are transmitted from the provider end (13) through at least one interactive channel (12), particularly a bidirectional interactive channel, to the at least one terminal (16).

7. Method according to one of claims 1 to 6, **characterised in that** the service data (31) and/or real-time data and/or virtual time data (44) are transmitted in the same transmission channel or in the same type of transmission channel as the one in which the transmission data are also transmitted.

8. Method according to one of claims 1 to 7, **characterised in that** the service data (31) and/or real-time data and/or virtual time data (44) are transmitted in a different transmission channel from the transmission data.

9. Method according to one of claims 1 to 8, **characterised in that** at least one computing device (15) is provided at the provider end (13), and **in that** the transmission data and/or service data (31) and/or real-time data and/or virtual time data (44) are transmitted from the at least one computing device (15) to the at least one terminal (16).

10. Method according to one of claims 1 to 9, **characterised in that** the virtual time data (44) consist of a time pair, **in that** one part of the time pair consists of real-time data and the other part of the time pair consists of the actual virtual time data.

11. Method according to one of claims 1 to 10, **characterised in that** the data transmission takes place on two or more transmission planes, **in that** on a first transmission plane transmission data are transmitted through at least one transmission channel to the terminal(s), **in that** at least one interactive functionality is provided at least temporarily, **in that** through activation of the interactive functionality a branch is created from the first transmission plane into at least one other transmission plane and **in that** after the activation of the interactive functionality through at least one transmission channel, data transmission takes place on the at least one other transmission plane.

12. Method according to claim 11, **characterised in that** the data transmission takes place on two or more transmission planes, **in that** on a first transmission plane transmission data are transmitted to the terminal(s) through at least one transmission channel in the form of a broadcast channel, **in that** at least temporarily at least one interactive functionality is provided in the form of a link to at least one other transmission plane, **in that** through activation of the interactive functionality a branch is created from the first transmission plane into at least one other transmission plane and **in that** after the activation of the interactive functionality through at least one transmission channel in the form of a broadcast channel and/or at least one interactive channel, data transmission takes place on the at least one other transmission plane.

13. Hybrid network (10) comprising at least one broadcast network with at least one broadcast channel (11) for transmitting transmission data from the provider end (13) to at least one terminal (14) at the user end (14), and a communications network with at least one interactive channel (12) for interaction between the user end (14) and the provider end (13), **characterised in that** it comprises means for carrying out the method according to one of claims 1 to 12.

## Revendications

1. Procédé pour la transmission de données dans un réseau de transmission hybride (10), comportant au moins un réseau de diffusion ayant au moins un canal de transmission, conçu en tant que canal de diffusion (11), pour la transmission de données de transmission du côté fournisseur (13) à au moins un dispositif terminal (14) du côté utilisateur (14), ainsi qu'un réseau de communication ayant au moins un canal de transmission, conçu en tant que canal d'interaction (12), pour l'interaction entre le côté utilisateur (14) et le côté fournisseur (13), des données de transmission étant transmises par le biais du canal de transmission (11, 12) d'au moins une source de données du côté fournisseur (13) au moins temporairement à au moins un dispositif terminal (16) du côté utilisateur (14), **caractérisé en ce que**, dans un générateur du côté fournisseur (13), des données temporelles virtuelles (44) sont générées pour la compensation logique de différences de temps de propagation lors de la transmission de données par le biais du canal de transmission (11, 12) et sont transmises audit au moins un dispositif terminal (16) du côté utilisateur (14), **en ce que** les données temporelles virtuelles (44) représentent des données temporelles relatives aux données de transmission et **en ce que** les données temporelles virtuelles (44) sont reçues dans ledit au moins un dispositif terminal (16) et y sont comptées continuellement de manière automatique.

2. Procédé selon la revendication 1, **caractérisé en ce que**, du côté fournisseur (13), des données en temps réel sont en outre transmises au moins temporairement au dit au moins un dispositif terminal (16) et **en ce que** dans ledit au moins dispositif terminal (16) sont prévus des moyens de synchronisation temporelle par le biais desquels des données temporelles déposées dans ledit au moins un dispositif terminal (16) sont synchronisées avec les données en temps réel transmises.

3. Procédé selon la revendication 1 ou 2, **caractérisé en ce que** les données de transmission transmises au dit au moins un dispositif terminal (16) sont déposées sur celui-ci et y sont stockées au moins temporairement.

4. Procédé selon l'une quelconque des revendications 1 à 3, **caractérisé en ce que** le réseau de transmission (10) est conçu en tant que réseau hybride, comprenant un réseau de diffusion ayant au moins un canal de diffusion (11) pour la transmission de données de transmission du côté fournisseur (13) à au moins un dispositif terminal (16) du côté utilisateur (14), ainsi qu'un réseau de communication ayant au moins un canal d'interaction (12) pour l'interaction entre le côté utilisateur (14) et le côté fournisseur (13), et **en ce que** des données sont transmises par le biais dudit au moins un canal de diffusion (11) et/ou dudit au moins un canal d'interaction (12).

5. Procédé selon l'une quelconque des revendications 1 à 4, **caractérisé en ce que** les données de transmission et/ou les données de service (31) et/ou les données en temps réel et/ou les données temporelles virtuelles (44) sont transmises du côté fournisseur (13) par le biais d'au moins un canal de diffusion (11), en particulier un canal de diffusion unidirectionnel, au dit au moins un dispositif terminal (16).

6. Procédé selon l'une quelconque des revendications 1 à 5, **caractérisé en ce que** les données de transmission et/ou les données de service (31) et/ou les données en temps réel et/ou les données temporelles virtuelles (44) sont transmises du côté fournisseur (13) par le biais d'au moins un canal d'interaction (12), en particulier un canal d'interaction bidirectionnel, au dit au moins un dispositif terminal (16).

7. Procédé selon l'une quelconque des revendications 1 à 6, **caractérisé en ce que** les données de service (31) et/ou les données en temps réel et/ou les données temporelles virtuelles (44) sont transmises dans le même canal de transmission ou dans le même type de canal de transmission, dans lequel les données de transmission sont également transmises.

8. Procédé selon l'une quelconque des revendications 1 à 7, **caractérisé en ce que** les données de service (31) et/ou les données en temps réel et/ou les données temporelles virtuelles (44) sont transmises dans un autre canal de transmission que les données de transmission.

9. Procédé selon l'une quelconque des revendications 1 à 8, **caractérisé en ce qu'**il est prévu du côté fournisseur (13) au moins un dispositif de calcul (15) et **en ce que** les données de transmission et/ou les données de service (31) et/ou les données en temps réel et/ou les données temporelles virtuelles (44) sont transmises par ledit au moins un dispositif de calcul (15) audit au moins un dispositif terminal (16).

10. Procédé selon l'une quelconque des revendications 1 à 9, **caractérisé en ce que** les données temporelles virtuelles (44) se composent d'une paire temporelle, **en ce qu'**une partie de la paire temporelle se compose de données en temps réel et **en ce que** l'autre partie de la paire temporelle se compose des données temporelles virtuelles proprement dites.

11. Procédé selon l'une quelconque des revendications 1 à 10, **caractérisé en ce que** la transmission de données a lieu sur deux plans de transmission ou plus, **en ce que**, sur un premier plan de transmission, des données de transmission sont transmises par le biais d'au moins un canal de transmission au (x) dispositif(s) terminal/terminaux, **en ce qu'**il est prévu au moins temporairement au moins une fonctionnalité interactive, **en ce qu'**une liaison du premier plan de transmission dans au moins un autre plan de transmission est provoquée par le biais d'une activation de la fonctionnalité interactive et **en ce que**, après l'activation de la fonctionnalité interactive, une transmission de données a lieu par le biais d'au moins un canal de transmission sur ledit au moins un autre plan de transmission.

12. Procédé selon la revendication 11, **caractérisé en ce que** la transmission de données a lieu sur deux plans de transmission ou plus, **en ce que**, sur un premier plan de transmission, des données de transmission sont transmises au (x) dispositif(s) terminal/terminaux par ledit au moins un canal de transmission sous forme d'un canal de diffusion, **en ce qu'**il est prévu au moins temporairement au moins une fonctionnalité interactive sous forme d'une liaison à au moins un autre plan de transmission, **en ce qu'**une liaison du premier plan de transmission dans au moins un autre plan de transmission est provoquée par le biais d'une activation de la fonctionnalité interactive et **en ce que**, après l'activation de la fonctionnalité interactive, une transmission de données a lieu au dit au moins un autre plan de transmission par le biais d'au moins un canal de transmission sous forme d'un canal de diffusion et/ou d'au moins un canal d'interaction.

13. Réseau hybride (10), comprenant au moins un réseau de diffusion ayant au moins un canal de diffusion (11) pour la transmission de données de transmission du côté fournisseur (13) à au moins un dispositif terminal (14) du côté utilisateur (14), ainsi qu'un réseau de communication ayant au moins un canal d'interaction (12) pour l'interaction entre le côté utilisateur (14) et le côté fournisseur (13), **caractérisé en ce que** ledit réseau comprend des moyens pour l'exécution du procédé selon l'une quelconque des revendications 1 à 12.
